# EUROPÄISCHE PATENTSCHRIFT

(11) **EP 0 557 844 B1**
(45) Veröffentlichungstag und Bekanntmachung des Hinweises auf die Patenterteilung: **07.05.1997**
(21) Anmeldenummer: 93102327.9
(22) Anmeldetag: 15.02.1993
(51) Int. Cl.: C08G 18/70, C08G 18/80, C08G 18/62, C08G 18/08, C09D 175/04

(54) **Beschichtungsmittel, ein Verfahren zu ihrer Herstellung und ihre Verwendung**
Coating agent, process for its preparation and its use
Agent de revêtement, procédé de sa préparation et son utilisation

(30) Priorität: 27.02.1992 DE 4206044
(43) Veröffentlichungstag der Anmeldung: 01.09.1993
(73) Patentinhaber: BAYER AG, 51368 Leverkusen (DE)
(72) Erfinder: Probst, Joachim, Dr., W-5090 Leverkusen 1 (DE); Kubitza, Werner, Dipl.-Ing., W-5090 Leverkusen 3 (DE); Roschu, Rolf, Dipl.-Ing., W-4156 Willich 2 (DE); Laas, Hans Josef, Dr., W-5000 Köln 60 (DE)

(56) Entgegenhaltungen:
- EP-A- 0 206 059
- EP-A- 0 310 345
- EP-A- 0 358 979
- EP-A- 0 467 168
- EP-A- 0 486 881
- DE-A- 1 469 360

## Beschreibung

Die Erfindung betrifft ein neues, wäßriges Zweikomponenten-Polyurethan-Beschichtungsmittel auf Basis von ausgewählten, in wäßrigem Milieu dispergiert vorliegenden Polyhydroxylverbindungen und in diesen Dispersionen emulgierten Polyisocyanaten, ein Verfahren zur Herstellung dieser Beschichtungsmittel durch Emulgieren der Polyisocyanatkomponente in besagter Dispersion und die Verwendung der Beschichtungsmittel zur Herstellung von Überzügen auf beliebigen wasserresistenten Substraten.

In der Oberflächen-Technologie spielen ökologische Fragen eine bedeutende Rolle. Ein besonders vordringliches Problem ist die Reduzierung der für Lacke und Beschichtungsstoffe verwendeten Mengen organischer Lösemittel.

Bei chemisch vernetzenden Polyurethanlacken, die aufgrund ihrer hervorragenden Eigenschaften auf dem Beschichtungssektor eine große Bedeutung haben, konnte bisher auf organische Lösemittel nicht verzichtet werden. Die Verwendung von Wasser anstelle von organischen Lösungsmitteln in Zweikomponenten-Polyurethanlacken auf Basis von Polyisocyanaten mit freien Isocyanatgruppen schien bis vor kurzem nicht möglich, da bekannt ist, daß Isocyanatgruppen nicht nur mit alkoholischen Hydroxylgruppen, sondern auch mit Wasser reagieren. Außerdem ist natürlich die Konzentration an, vom Wasser herrührenden, aktiven Wasserstoffatomen in derartigen Systemen weit höher als die Konzentration an Hydroxylgruppen der organischen, NCO-reaktiven Komponente, so daß davon ausgegangen werden mußte, daß in dem ternären System Polyisocyanat/organische Polyhydroxylverbindung/Wasser vor allem eine Isocyanat-Wasser-Reaktion unter Harnstoff- und Kohlendioxidbildung abläuft, die einerseits nicht zur Vernetzung der organischen Polyhydroxylverbindungen und andererseits zur Schäumung des Lackansatzes aufgrund der Kohlendioxidbildung führt.

Es war zwar aus der DE-OS 2 708 442 bzw. der DE-OS 3 529 249 bereits bekannt, wäßrigen Kunststoffdispersionen organische Polyisocyanate zwecks Verbesserung des Eigenschaftsbilds zuzusetzen, jedoch handelt es sich bei diesen Kunststoffen einerseits nicht um organische Polyhydroxylverbindungen der üblicherweise in der Polyurethanchemie als Reaktionspartner für Polyisocyanate eingesetzten Art, und andererseits ist der in diesen Vorveröffentlichungen beschriebene Effekt der Polyisocyanatzugabe zu wäßrigen Kunststoffdispersionen vermutlich auf eine Umhüllung des dispergierten Kunststoffs mit dem aus Polyisocyanat und Wasser gebildeten Harnstoff zurückzuführen.

Erst aus der in jüngerer Zeit erschienenen europäischen Patentanmeldung EP-A-0 358 979 wurde bekannt, daß bei Verwendung von ausgewählten Polyhydroxylverbindungen auf Vinylpolymerisat-Basis als Reaktionspartner für organische Polyisocyanate mit freien Isocyanatgruppen waßrige Zweikomponenten-Polyurethansysteme dadurch hergestellt werden können, daß man die Polyisocyanate mit freien Isocyanatgruppen in der wäßrigen Polymerisatlösung bzw. -dispersion emulgiert.

Die in der EP-A-0 358 979 beschriebenen Polyhydroxylverbindungen werden vorzugsweise radikalisch polymerisiert und weisen eine Säurezahl (bezogen auf die nicht neutralisierten Sulfonsäure- und/oder Carboxylgruppen) von 0 bis 150, vorzugsweise 0 bis 100 mg KOH/g Festharz, und einen Gehalt an Sulfonat- und/oder Carboxylatgruppen von 5 bis 417, vorzugsweise 24 bis 278 Milliäquivalenten pro 100 g Feststoff auf.

Es wurde nun überraschenderweise gefunden, daß auch bei Verwendung von Vinylpolymerpolyolen mit Sulfonat- und/oder Carboxylatgruppen-Gehalten unter 5 Milliäquivalenten pro 100 g Festharz Zweikomponenten-Polyurethansysteme mit sehr guten Eigenschaften wie z.B. langen Standzeiten und hohen Löserfestigkeiten resultieren können, wenn als Polyisocyanatkomponente hydrophilmodifizierte (cyclo)aliphatische Lackpolyisocyanate der nachstehend näher beschriebenen Art zur Anwendung gelangen.

Die nicht vorveröffentlichte, ältere EP-A 0 486 881 beschreibt u.a. Kombinationen aus hydrophilmodifizierten Diisocyanaten mit wäßrigen Lösungen von Hydroxylgruppen aufweisenden Polyacrylaten und deren Verwendung als Klebstoff. Hydrophilmodifizierte, höherfunktionelle Lackpolyisocyanate der Art der nachstehend näher beschriebenen erfindungsgemäßen Komponente b) werden in diesem Dokument nicht beschrieben.

Die DE-A 1 469 360 beschreibt ein Verfahren zur Veredelung von Textilmaterialien unter Verwendung von wäßrigen Flotten aus Hydroxylgruppen aufweisenden Polyacrylatharzen und NCO-Prepolymeren, die unter Mitverwendung von externen Emulgatoren bzw. in Form ihrer Bisulfit-Additionsprodukte in Wasser dispergiert werden können. Hydrophilmodifizierte Lackpolyisocyanate der Art der nachstehend naher beschriebenen erfindungsgemäßen Komponente b) werden in diesem Dokument nicht erwähnt.

Die EP-A 0 310 345 beschreibt wäßrige Klebstoffe auf Basis von Hydroxylgruppen aufweisenden Vinylchlorid-Copolymerisaten und hydrophilmodifizierten aromatischen Polyisocyanaten ohne jeglichen Hinweis auf Beschichtungsmittel auf Basis von hydrophilmodifizierten (cyclo)aliphatischen Lackpolyisocyanaten.

Gegenstand der Erfindung sind daher gegebenenfalls die üblichen Hilfs- und Zusatzmittel der Lacktechnologie enthaltende, wäßrige Beschichtungsmittel, deren Bindemittel im wesentlichen aus einer Kombination aus
a) einer in Wasser bzw. einem Wasser/Lösungsmittel-Gemisch dispergiert vorliegenden Polyolkomponente und
b) einer in der Dispersion der Polyolkomponente a) emulgiert vorliegenden Polyisocyanatkomponente einer Viskosität bei 23°C von 50 bis 10 000 mPa.s

in einem Äquivalentverhältnis von Isocyanatgruppen der Komponente b) zu alkoholischen Hydroxylgruppen der Komponente a) von 0,2:1 bis 5:1 entsprechenden Mengen besteht, dadurch gekennzeichnet, daß
die in a) dispergiert vorliegende Polyolkomponente im wesentlichen aus mindestens einem Polymerisat olefinisch ungesättigter Monomerer mit einem Molekulargewicht Mn von mindestens 500, mindestens zwei alkoholischen Hydroxylgruppen pro Molekül, einer Hydroxylzahl von 15 bis 250 mg KOH/g, einer Säurezahl von 0 bis 7 mg KOH/g und einem Gehalt an Sulfonat- und/oder Carboxylatgruppen von insgesamt 0 bis 4,5 Milliäquivalenten pro 100 g Festharz besteht
und die Komponente b) aus einer Polyisocyanatkomponente mit einer mittleren NCO-Funktionalität von 1,8 bis 4,2, einem Gehalt an (cyclo)aliphatisch gebundenen Isocyanatgruppen von 12,0 bis 21,5 Gew.-% besteht, die einen Gehalt an innerhalb von Polyetherketten angeordneten Ethylenoxideinheiten von 2 bis 20 Gew.-% aufweist, wobei die Polyetherketten im statistischen Mittel 5 bis 70 Ethylenoxideinheiten aufweisen, und wobei die Herstellung der Polyisocyanatkomponente durch Umsetzung einer Polyisocyanatkomponente A) mit einer (mittleren) NCO-Funktionalitat von 2,1 bis 4,4, bestehend aus mindestens einem Polyisocyanat mit ausschließlich (cyclo)aliphatisch gebundenen Isocyanatgruppen mit einem ein- oder mehrwertigen, im statistischen Mittel von 5 bis 70 Ethylenoxideinheiten aufweisenden Polyalkylenoxidpolyetheralkohol B) unter Einhaltung eines NCO/OH-Äquivalentverhältnisses von mindestens 2:1 erfolgte.

Gegenstand der Erfindung ist auch ein Verfahren zur Herstellung derartiger Beschichtungsmittel, welches dadurch gekennzeichnet ist, daß man in einer wäßrigen oder wäßrig-organischen Dispersion mindestens eines Polymerisatharzes der genannten Art eine Polyisocyanatkomponente der genannten Art emulgiert, wobei die Mengenverhältnisse der Einzelkomponenten einem Äquivalentverhältnis von Isocyanatgruppen zu alkoholischen Hydroxylgruppen von 0,2:1 bis 5:1 entsprechen, und wobei gegebenenfalls mitverwendete Hilfs- und Zusatzstoffe dem System vor der Zugabe des Polyisocyanats einverleibt werden.

Gegenstand der Erfindung ist schließlich auch noch die Verwendung dieser Beschichtungsmittel zur Herstellung von Beschichtungen auf beliebigen wasserresistenten Substraten.

Bei der in a) dispergiert vorliegenden Polyolkomponente handelt es sich im wesentlichen um mindestens ein Polymerisatharz olefinisch ungesättigter Monomerer mit einem nach der Gelpermeationschromatographie bestimmbaren Molekulargewicht Mn von mindestens 500, vorzugsweise von 500 bis 100 000 und insbesondere von 1000 bis 50 000, mit (im statistischen Mittel) mindestens zwei alkoholischen Hydroxylgruppen pro Molekül, einer Hydroxylzahl von 15 bis 250, vorzugsweise 30 bis 150 mg KOH/g Feststoff, einer Säurezahl (basierend auf freie Sulfonsäure- bzw. Carboxylgruppen) von 0 bis 7, vorzugsweise 0 mg KOH/g Festharz und einem Gehalt an eingebauten Sulfonat- und/oder Carboxylatgruppen von insgesamt 0 bis 4,5, vorzugsweise 0 Milliäquivalenten pro 100 g Festharz.

Bei den Dispersionen a) handelt es sich im allgemeinen um solche, die 10 bis 50, vorzugsweise 20 bis 40 Gew.-% der genannten Polymerisatharze als disperse Phase aufweisen und in denen gegebenenfalls bis zu 20 Gew.-%, bezogen auf das Gewicht der kontinuierlichen Phase, an organischen Lösungsmitteln der nachstehend beispielhaft genannten Art vorliegen. Die kontinuierliche Phase der Dispersionen besteht somit im wesentlichen aus Wasser. Die Dispersionen a) weisen bei 23°C im allgemeinen eine Viskosität von 10 bis 10⁵, vorzugsweise 100 bis 10 000 mPa.s und einen pH-Wert von 5 bis 10, vorzugsweise 6 bis 9 auf.

Die Dispergierbarkeit der Polymerisatharze beruht vor allem auf der Anwesenheit von Emulgatoren der nachstehend noch näher beschriebenen Art. Außerdem kann die Komponente a) gegebenenfalls, allerdings weniger bevorzugt, bis zu 10 Gew.-%, bezogen auf das Gewicht der Polymerisatharze, an wasserlöslichen von den evtl. mitverwendeten, nachstehend genannten Lösungsmitteln verschiedenen, mehrwertigen Alkoholen des Molekulargewichtsbereichs 62 bis 499, vorzugsweise 62 bis 200, wie beispielsweise Ethylenglykol, Propylenglykol, Glycerin, Trimethylolpropan oder die niedermolekularen, wasserlöslichen Alkoxylierungsprodukte derartiger mehrwertiger Alkohole enthalten.

Die Herstellung der Polymerisatharze erfolgt nach an sich bekannten Methoden der radikalischen Polymerisation, z.B. der Lösungspolymerisation, der Emulsionspolymerisation und der Suspensionspolymerisation. Bevorzugt ist das Verfahren der radikalischen Emulsionspolymerisation im wäßrigen Milieu.

Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird Wasser allein oder mit einem Teil des anionischen Emulgators, gegebenenfalls unter Beimischung eines nichtionischen Emulgators, sowie mit einem Teil der Monomermischung vorgelegt, auf die Polymerisationstemperatur erwärmt, die Polymerisation im Fall einer Monomervorlage radikalisch gestartet und das restliche Monomergemisch zusammen mit einem Initiatorgemisch und dem Emulgator im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Die hierbei eingesetzten Emulgatoren sind anionischer und/oder nichtionischer Natur. Von den Emulgatoren mit anionischer Natur sind solche mit Carboxylatgruppen, Sulfat-, Sulfonat-, Phosphat- oder Phosphonatgruppen einsetzbar, Bevorzugt sind Emulgatoren mit Sulfat-, Sulfonat-, Phosphat- oder Phosphonatgruppen. Die Emulgatoren können niedermolekular oder hochmolekular sein. Letztere werden z.B. in der DE-OS 3 806 066 und der DE-AS 1 953 349 beschrieben.

Bevorzugt sind solche anionischen Emulgatoren, die aus langkettigen Alkoholen oder substituierten Phenolen und einer an der Hydroxylgruppe gebundenen Polyetherkette aus Ethylenoxideinheiten mit Polymerisationsgraden zwischen 2 und 100 sowie einer in Form einer Estereinheit angebundenen Schwefelsäure- bzw. Phosphorsäuregruppe aufgebaut sind. Als Neutralisationsmittel für die unveresterten Säuregruppen sind Ammoniak oder Amine bevorzugt. Die Emulgatoren können dem Emulsionsansatz einzeln oder in beliebigen Mischungen zugesetzt werden.

Als nichtionogene Emulgatoren, die meist in Kombination mit den obengenannten anionischen Emulgatoren eingesetzt werden können, eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z.B. Ethylenoxid. Beispiele dafür sind Umsetzungsprodukte von Ethylenoxid mit Carbonsäuren des Ricinusöls, Abietinsäure, mit längerkettigen Alkoholen wie Oleylalkohol, Laurylalkohol, Stearylalkohol, mit Phenolderivaten wie z.B. substituierten Benzyl-, Phenylphenolen, Nonylphenolen und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Diese Emulgatoren werden in Mengen von 0,1 bis 10 Gew.-%, bezogen auf die Mischung der Monomeren zugegeben. Als eventuelle Colösemittel kommen sowohl wasserlösliche als auch wasserunlösliche Lösungsmittel in Betracht. Als solche kommen beispielsweise Aromaten wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ether des Diglykols, Ketone wie Aceton, Methylethylketon, Methylisobutylketon, Trichlormonofluorethan, cyclische Amide wie N-Methylpyrrolidon oder N-Methylcaprolactam in Betracht.

Die durch Radikale initiierte Polymerisation kann durch wasserlösliche und wasserunlösliche Initiatoren bzw. Initiatorsysteme ausgelöst werden, deren Halbwertzeiten des Radikalzerfalls bei Temperaturen von 10°C bis 100°C zwischen 0,01 und 400 min liegen.

Im allgemeinen erfolgt die Polymerisation in wäßriger Emulsion im genannten Temperaturbereich, vorzugsweise zwischen 30 und 90°C, unter einem Druck von 10³ bis 2 x 10⁴ mbar, wobei sich die genaue Polymerisationstemperatur nach der Art des Initiator richtet. Die Initiatoren werden in Mengen von 0,05 bis 6 Gew.-%, bezogen auf die Gesamtmenge an Monomeren eingesetzt.

Als Monomere kommen insbesondere Hydroxylgruppen aufweisende Monomere der in EP-A-0 358 979, Seite 3, Zeile 57 - Seite 4, Zeile 2 genannten Art und weder Hydroxylgruppen noch saure Gruppen aufweisende Monomere der in EP-A-0 358 979, Seite 4, Zeilen 3-11 genannten Art in Betracht. Saure, d.h. Carboxyl- und/oder Sulfonsäuregruppen aufweisende Monomere werden allenfalls in solchen geringen Mengen mitverwendet, die den obengemachten Ausführungen bezüglich Säurezahl und Gehalt an ionischen Gruppen entsprechen. Vorzugsweise wird auf die Mitverwendung derartiger saurer Monomerer völlig verzichtet.

Geeignete Initiatoren sind z.B. wasserlösliche und -unlösliche Azoverbindungen wie Azoisobuttersäuredinitril oder 4,4'-Azo-bis-(4-cyanpentansäure) sowie anorganische und organische Peroxide wie z.B. Dibenzoylperoxid, t-Butylperpivalat, t-Butyl-per-2-ethylhexanoat, t-Butylperbenzoat, t-Butylhydroperoxid, Di-t-butylperoxid, Cumolhydroperoxid, Dicyclohexyl- und Dibenzylperoxydicarbonat sowie die Natrium-, Kalium- oder Ammoniumsalze der Peroxodischwefelsäure und Wasserstoffperoxid. Die Peroxodisulfate und Wasserstoffperoxide werden oft in Kombination mit Reduktionsmitteln wie z.B. dem Natriumsalz der Formamidinsulfinsäure (Rongalit C), Ascorbinsäure oder Polyalkylenpolyaminen eingesetzt. Hiermit wird im allgemeinen eine deutliche Erniedrigung der Polymerisationstemperatur erzielt.

Zur Regelung des Molekulargewichts der Polymeren können übliche Regler eingesetzt werden wie z.B. n-Dodecylmercaptan, t-Dodecylmercaptan, Diisopropylxanthogendisulfid, Di(methylentrimethylolpropan)xanthogendisulfid und Thioglykol. Sie werden in Mengen von höchstens 3 Gew.-%, bezogen auf das Monomergemisch, zugegeben.

Nach beendeter Polymerisation werden die in wäßriger Dispersion vorliegenden Polymerisate gegebenenfalls mit Neutralisationsmittel bis zu Neutralisationsgraden von 30 bis 100 %, vorzugsweise 50 bis 100 %, versetzt.

Hierzu werden als Neutralisationsmittel anorganische Basen, Ammoniak oder Amine zugesetzt. Als anorganische Basen können z.B. Natriumhydroxid, Kaliumhydroxid, als Amine neben Ammoniak Trimethylamin, Triethylamin, Dimethylethanolamin, Methyldiethanolamin, Triethanolamin etc. eingesetzt werden. Die Neutralisationsmittel können sowohl im stöchiometrischen Unter- als auch Überschuß eingesetzt werden, wobei die obengenannten Gehalte an Sulfonat- und/oder Carboxylatgruppen, insbesondere an Carboxylatgruppen und die obengenannten Säurezahlen resultieren.

Im Falle einer völligen Neutralisation der gegebenenfalls vorliegenden sauren Gruppen resultiert dann die Säurezahl Null, während der Gehalt an Sulfonat- und/oder Carboxylatgruppen dem ursprünglichen Gehalt an Sulfonsäuregruppen bzw. Carboxylgruppen entspricht. Bei einer Teilneutralisation entsprechen die Gehalt an Sulfonat- und/oder Carboxylatgruppen der Menge des eingesetzten Neutralisationsmittels. Die erhaltenen wäßrigen Dispersionen besitzen die obengenannten Konzentrationen und Viskositäten. Eventuell zugesetzte Colösungsmittel können in den oben angegebenen Mengen in der wäßrigen Dispersion verbleiben oder aber auch im Anschluß an die Polymerisationsreaktion destillativ entfernt werden.

Als Vernetzerkomponente b) geeignete Polyisocyanate sind Polyisocyanatgemische mit
a) einer mittleren NCO-Funktionalität von 1,8 bis 4,2,
b) einem Gehalt an (cyclo)aliphatisch gebundenen Isocyanatgruppen (berechnet als NCO, Molekulargewicht = 42) von 12,0 bis 21,5 Gew.-% und vorzugsweise
c) einem Gehalt an innerhalb von Polyetherketten angeordneten Ethylenoxideinheiten (berechnet als C₂H₄O, Molekulargewicht = 44) von 2 bis 20 Gew.-%, wobei die Polyetherketten im statistischen Mittel von 5 bis 70 Ethylenoxideinheiten aufweisen.

Die Herstellung dieser Polyisocyanatgemische erfolgt in an sich bekannter Weise durch Umsetzung einer Polyisocyanatkomponente A) mit einer (mittleren) NCO-Funktionalität von 2,1 bis 4,4, vorzugsweise 2,3 bis 4,3, bestehend aus mindestens einem Polyisocyanat mit ausschließlich (cyclo)aliphatisch gebundenen Isocyanatgruppen mit einem ein- oder mehrwertigen, im statistischen Mittel von 5,0 bis 70 Ethylenoxideinheiten aufweisenden Polyalkylenoxidpolyetheralkohol B) unter Einhaltung eines NCO/OH-Äquivalentverhältnisses von mindestens 2:1, im allgemeinen von 4:1 bis ca. 100:1, wobei im übrigen Art und Mengenverhältnisse der genannten Ausgangskomponenten so gewählt werden, daß die resultierenden Umsetzungsprodukte den oben unter a) bis c) genannten Bedingungen entsprechen.

Es handelt sich bei den Polyisocyanaten bzw. Polyisocyanatgemischen der Komponente A) um beliebige, durch Modifizierung einfacher (cyclo)aliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-OS'en 1 670 666, 3 700 209 und 3 900 053 oder den EP-A'en 336 205 und 339 396 beispielhaft beschrieben sind.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate.

Bevorzugt handelt es sich bei den zur Herstellung der wasseremulgierbaren Polyisocyanate eingesetzten Ausgangskomponenten A) um im wesentlichen aus trimerem 1,6-Diisocyanatohexan und gegebenenfalls dimerem 1,6-Diisocyanatohexan bestehenden Isocyanuratgruppen und gegebenenfalls Uretdiongruppen aufweisende Polyisocyanatgemische mit einem NCO-Gehalt von 19 bis 24 Gew.-%. Besonders bevorzugt werden als Komponente A) die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen.

Bei der Komponente B) handelt es sich um ein- oder mehrwertige im statistischen Mittel 5 bis 70, vorzugsweise 6 bis 60 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Zur Herstellung der Polyetheralkohole B) können beliebige ein- oder mehrwertige Alkohole des Molekulargewichtsbereichs 32 bis 150, wie sie beispielsweise auch gemäß EP-A 206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Polyethylenoxidpolyether oder um gemischte Polyalkylenoxidpolyether, die mindestens eine, mindestens 5, im allgemeinen 5 bis 70, vorzugsweise 6 bis 60 und besonders bevorzugt 7 bis 20 Ethylenoxideinheiten aufweisende Polyetherkette enthalten und deren Alkylenoxideinheiten zu mindestens 60 Mol-%, vorzugsweise zu mindestens 70 Mol-% aus Ethylenoxideinheiten bestehen.

Bevorzugte Polyetheralkohole B) zur Herstellung der wasseremulgierbaren Polyisocyanatgemische sind monofunktionelle, auf einem aliphatischen, 1 bis 4 Kohlenstoffatome aufweisenden Alkohol gestartete Polyalkylenoxidpolyether, die im statistischen Mittel 6 bis 60 Ethylenoxideinheiten enthalten. Besonders bevorzugte Polyetheralkohole B) sind reine Polyethylenglykolmonomethyletheralkohole, die im statistischen Mittel 7 bis 20 Ethylenoxideinheiten aufweisen.

Zur Herstellung der gebrauchsfertigen Beschichtungsmittel wird die Polyisocyanatkomponente b) in der wäßrigen Dispersion der Polymerisate a) emulgiert.

Die Durchmischung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente b) und die alkoholischen Hydroxylgruppen der Komponente a), inclusive den Hydroxylgruppen der gegebenenfalls mitverwendeten, wasserlöslichen, niedermolekularen Polyhydroxylverbindungen, von 0,2:1 bis 5:1, vorzugsweise 0,5:1 bis 2:1, resultiert. Vor der Zugabe der Polyisocyanatkomponente b) können der Polymerisatkomponente a), d.h. der Dispersion der Polymerisate die üblichen Hilfs- und Zusatzmittel der Lacktechnologie einverleibt werden. Hierzu gehören beispielsweise Entschäumungsmittel, Verlaufhilfsmittel, Verdicker, Pigmente, Dispergierhilfsmittel für die Pigmentverteilung und dgl.

Die so erhaltenen erfindungsgemäßen Beschichtungsmittel eignen sich für praktisch alle Einsatzgebiete, in denen heute lösemittelhaltige, lösemittelfreie oder andersartige wäßrige Anstrich- und Beschichtungssysteme mit einem erhöhten Eigenschaftsprofil Verwendung finden, z.B. Beschichtung praktisch aller mineralischer Baustoff-Oberflächen wie Kalk- und/oder Zement-gebundene Putze, Gips enthaltende Oberflächen, Faser-Zement-Baustoffe, Beton, Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- und bitumenhaltiger Straßenbeläge; Lackierung und Versiegelung diverser Kunststoffoberflächen; Beschichtung von Leder und Textilien; außerdem sind sie zur flächigen Verklebung diverser Werkstoffe geeignet, wobei gleichartige und unterschiedliche Werkstoffe miteinander verbunden werden.

Die Härtung bzw. Vernetzung des Zweikomponenten-Systems kann nach Applikation auf dem jeweiligen Substrat bei Temperaturen von 0 bis 300°C, vorzugsweise zwischen Raumtemperatur und 200°C, erfolgen.

In den nachfolgenden Beispielen beziehen sich alle Prozentangaben auf Gewichtsprozente.

### Beispiele

### Ausgangsmaterialien:

### Polyisocyanat 1

1,0 Val eines Isocyanuratgruppen-haltigen Polyisocyanates auf Basis von 1,6-Diisocyanatohexan (HDI) mit einem NCO-Gehalt von 21,5 % einer mittleren NCO-Funktionalität von ca. 3,8 und einer Viskosität von 3000 mPa.s (23°C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein praktisch farbloses klares Polyisocyanatgemisch vor. Der NCO-Gehalt beträgt 17,3 %, der Gehalt an Ethylenoxideinheiten beträgt 11,3 % und die Viskosität 3050 mPa.s (23°C).

### Polymerdispersion 1

In einem 3 l-Rührautoklaven mit Rückflußkühler, wirksamem Rührer sowie Gaseinlaß- und -auslaß wird eine Vorlage aus 25 g eines anionischen Emulgators (Ammoniumsalz eines Monoschwefelsäureesters eines Addukts aus Laurylalkohol und Ethylenoxid im Molverhältnis 1:3) und 600 g entionisiertem Wasser vorgelegt und mit Stickstoff gespült. Anschließend wird Stickstoff in einem stetigen Strom übergeleitet und die Vorlage unter Rühren bei ca. 200 U/min auf eine Temperatur von 80°C erwärmt. Anschließend wird eine Mischung von 34 g Hydroxypropylmethacrylat (Anlagerungsprodukt von Propylenoxid an Methacrylsäure), 40 g Acrylsäure-n-butylester, 23 g Methacrylsäuremethylester und 1 g t-Dodecylmercaptan sowie eine Lösung von 0,3 g Ammoniumperoxodisulfat in 20 g entionisiertem Wasser schnell zur Vorlage zugegeben. Nach einer Reaktionszeit von 30 min wird eine Mischung von 305 g Hydroxypropylmethacrylat (Anlagerungsprodukt von Propylenoxid an Methacrylsäure), 360 g Acrylsäure-n-butylester, 208 g Methacrylsäuremethylester und 9 g t-Dodecylmercaptan sowie eine Lösung von 3 g Ammoniumperoxodisulfat in 850 g entionisiertem Wasser gleichmäßig in 4 Stunden zudosiert. Nach weiteren 2 Stunden wird mit einer Lösung von 1 g Ammoniumperoxodisulfat in 10 g entionisiertem Wasser nachaktiviert und 4 Stunden lang auspolymerisiert.

Anschließend wird mit ca. 6 ml 25 %igem wäßrigem Ammoniak auf einen pH-Wert von 7,4 eingestellt. Anschließend wird bei vermindertem Druck von 200 bis 400 mbar entgast und Restmonomere entfernt. Die hierbei übergehende Menge an wäßrigem Destillat wird durch frisches entionisiertes Wasser ersetzt. Anschließend wird auf Raumtemperatur abgekühlt und filtriert. Es wurde kein nennenswerter Filterrückstand festgestellt. Die weiteren Kenndaten der Polymerdispersion lauten:

| | |
|---|---|
| Konzentration: | 40,4 Gew.-% |
| Viskosität bei 23°C: | unter 100 mPa.s |
| mittlerer Teilchendurchmesser: (gemessen mit Laserkorrelationsspektroskopie) | 201 ± 2 nm |
| OH-Zahl des dispergierten Polymerisationsharzes (berechnet): | 132 mg KOH/g Feststoff |

### Polymerdispersion 2

In derselben Apparatur wie bei der Herstellung der Polymerdispersion 1 werden 25 g des ebenfalls bei 1 beschriebenen anionischen Emulgators in 820 g entionisiertem Wasser vorgelegt. Unter Rühren und Stickstoffbegasung wird die Vorlage auf 80°C erwärmt. Anschließend wird eine Monomermischung von 169 g Hydroxypropylmethacrylat (Anlagerungsprodukt von Propylenoxid an Methacrylsäure), 400 g Acrylsäure-n-butylester, 401 g Methacrylsäuremethylester und 10 g t-Dodecylmercaptan sowie eine Initiatorlösung von 15 g 35 %igem wäßrigem Wasserstoffperoxid in 640 g entionisiertem Wasser in 6 Stunden gleichmäßig zudosiert. Anschließend wird 2 Stunden nachgerührt und danach mit einer Initiatorlösung von 1 g 35 %igem wäßrigem Wasserstoffperoxid in 10 g Wasser nachaktiviert und 4 Stunden lang auspolymerisiert. Anschließend wird mit ca. 4 ml wäßriger 25 %iger Ammoniaklösung auf einen pH-Wert von 8,0 eingestellt.

Dann wird bei vermindertem Druck von 200 bis 400 mbar entgast und Restmonomere entfernt. Die hierbei übergehende Menge an wäßrigem Destillat wird durch frisches entionisiertes Wasser ersetzt. Anschließend wird auf Raumtemperatur abgekühlt und filtriert. Die weiteren Kenndaten der Polymerdispersion lauten:

| | |
|---|---|
| Konzentration: | 40,9 Gew.-% |
| Viskosität bei 23°C: | unter 100 mPa.s |
| mittlerer Teilchendurchmesser: (gemessen mit Laserkorrelationsspektroskopie) | 130 ± 2 nm |
| OH-Zahl des dispergierten Polymerisationsharzes (berechnet): | 66 mg KOH/g Feststoff |

### Beispiel 1

100 Gew.-Teile der Polymerdispersion 1 werden mit 4,04 Gew.-Teilen einer 5,0 gew.-%igen wäßrigen Lösung eines handelsüblichen Polyurethanverdickers (®Acrysol RFM 8 der Fa. Rohm und Haas, Frankfurt) sowie 0,2 Gew.-Teilen eines handelsüblichen Entschäumers (®Bevaloid 581 B der Fa. Erbslöh, Düsseldorf) gemischt. Man erhält somit 104,2 Gew.-Teile einer praktisch unbegrenzt lagerfähigen Polyolkomponente für ein wasserverdünnbares 2-Komponenten-Polyurethan-Klarlacksystem, Nach Zugabe von 34,8 Gew.-Teilen Polyisocyanat 1 erhält man einen wasserverdünnbaren Zweikomponenten-Polyurethan-Klarlack folgender Zusammensetzung:

| | |
|---|---|
| Polyol, 100 %ig | 40,4 Gew.-Teile = 29,06 Gew.-% |
| Verdicker, 100 %ig | 0,2 Gew.-Teile = 0,14 Gew.-% |
| Entschäumer | 0,2 Gew.-Teile = 0,14 Gew.-% |
| Polyisocyanat 100 % | 34,8 Gew.-Teile = 25,04 Gew.-% |
| Feststoffanteil | 75,6 Gew.-Teile = 54,38 Gew.-% |
| Wasser | 63,4 Gew.-Teile = 45,62 Gew.-% |
| Gesamt | 129,0 Gew.-Teile = 100,00 Gew.-% |

Der Lack enthält hierbei keine organischen Lösemittel. Das Verhältnis von NCO/OH-Gruppen beträgt 1,5:1.

In einer Naßfilmdicke von 120 bis 240 µm auf Glasplatten appliziert (= 40 bis 70 µm, trocken) trocknet er innerhalb von 24 Stunden zu einem homogenen, transparenten zähharten Film. Nach endgültiger Aushärtung, dies wird nach ca. 14 Tagen bei Raumtemperatur erreicht, verfügt der Film über folgende Eigenschaften:

| | |
|---|---|
| Optik (Transparenz/Glanz) Lösemittelbeständigkeit: | sehr gut |
| Testbenzin: | sehr gut |
| Solventnaphtha 100: | sehr gut |
| Methoxypropylacetat: | sehr gut |
| Aceton: | mäßig |
| Ethanol: | gut-mäßig |
| Pendelhärte (Albert/König): | 100-110 sec |

Wird der applizierte Lackfilm nicht bei Raumtemperatur gehärtet, sondern bei 140°C während 1 Stunde eingebrannt, so resultiert folgendes Eigenschaftsbild:

| | |
|---|---|
| Optik Lösemittelbeständigkeit: | sehr gut |
| Testbenzin: | sehr gut |
| Solventnaphtha 100: | sehr gut |
| Methoxypropylacetat: | sehr gut |
| Aceton: | mäßig |
| Ethanol: | gut-mäßig |
| Pendelhärte: | 130-140 sec |

### Beispiel 2

100 Gew.-Teile der Polymerdispersion 2 werden mit 4,09 Gew.-Teilen einer 5,0 gew.-%igen Lösung eines handelsüblichen Polyurethan-Verdickers (®Acrysol RM 8 der Fa. Rohm und Haas, Frankfurt) sowie 0,2 Gew.-Teilen eines handelsüblichen Entschäumers (®Bevaloid 581 B der Fa. Erbslöh, Düsseldorf) gemischt. Man erhält somit 104,29 Gew.-Teile einer praktisch unbegrenzt lagerfähigen Polyol-Komponente für ein wasserverdünnbares 2-Komponenten-Polyurethan-Klarlacksystem. Nach Zugabe von 17,6 Gew.-Teilen Polyisocyanat 1 erhält man einen wasserverdünnbaren Zweikomponenten-Polyurethan-Klarlack folgender Zusammensetzung:

| | |
|---|---|
| Polyol, 100 %ig | 40,9 Gew.-Teile = 33,55 Gew.-% |
| Verdicker, 100 %ig | 0,2 Gew.-Teile = 0,16 Gew.-% |
| Entschäumer | 0,2 Gew.-Teile = 0,16 Gew.-% |
| Polyisocyanat 100 % | 17,6 Gew.-Teile = 14,44 Gew.-% |
| Feststoffanteil | 58,9 Gew.-Teile = 48,32 Gew.-% |
| Wasser | 63,0 Gew.-Teile = 51,68 Gew.-% |
| Gesamt | 121,9 Gew.-Teile = 100,00 Gew.-% |

Der Lack enthält hierbei keine organischen Lösemittel. Das Verhältnis von NCO/OH-Gruppen beträgt 1,5:1.

In einer Naßfilmdicke von 120 bis 240 µm auf Glasplatten appliziert (= 40 bis 70 µm, trocken) trocknet der Lack bis zur Staubtrocknung 30 bis 60 Minuten und bis zur Klebfreiheit (Drucktrocknung) > 8 < 24 Stunden zu einem zähharten Film.

Nach endgültiger Aushärtung, dies wird nach ca. 14 Tagen bei Raumtemperatur erreicht, verfügt der Film über folgende Eigenschaften:

| | |
|---|---|
| Optik (Transparenz/Glanz) Lösemittelbeständigkeit: | sehr gut |
| Testbenzin: | sehr gut |
| Solventnaphtha 100: | gut |
| Methoxybutylacetat: | gut |
| Aceton: | mäßig |
| Ethanol: | gut |
| Pendelhärte (Albert/König): | 70-80 sec |

Wird der applizierte Lackfilm nicht bei Raumtemperatur gehärtet, sondern 1 Stunde bei 140°C eingebrannt, so ergibt sich folgendes Eigenschaftsbild:

| | |
|---|---|
| Optik Lösemittelbeständigkeit: | sehr gut |
| Testbenzin: | sehr gut |
| Solventnaphtha 100: | sehr gut |
| Methoxypropylacetat: | sehr |
| Aceton: | mäßig |
| Ethanol: | gut |
| Pendelhärte: | 115-125 sec |

### Beispiel 3

100 Gew.-Teile der Polymerdispersion 1 werden mit 0,2 Gew.-Teilen eines handelsüblichen Entschäumers (®Bevaloid 581 B, Fa. Erbslöh, Düsseldorf) sorgfältig verrührt und diesem Gemisch anschließend 34,7 Gew.-Teile eines handelsüblichen Pigmentes (Bayertitan R-KB-4, Bayer AG, Leverkusen) zugesetzt.

Es erfolgt eine Dispergierung unter dem Dissolver während 30 Minuten mit einer Drehgeschwindigkeit von 15 bis 20 m/sec. Zur Unterstützung des Dispergierprozesses werden dem Ansatz noch Glasperlen zugesetzt. Nach Sieben und Abkühlen werden dem Ansatz 4,04 Gew.-Teile einer 5 gew.-%igen Lösung eines handelsüblichen Verdickers (®Acrysol RM 8, Fa. Rohm und Haas, Frankfurt) zugefügt und verrührt.

Man erhält so die Polyhydroxy-Komponente für einen wasserverdünnbaren Zweikomponenten-Polyurethan-Weißlack mit praktisch unbegrenzter Lagerstabilität.

Nach Zugabe von 46,4 Gew.-Teilen Polyisocyanat 1 erhält man einen wasserverdünnbaren Zweikomponenten-Polyurethanlack, der sich wie folgt zusammensetzt:

| | |
|---|---|
| Polyacrylatharz fest | 21,80 Gew.-% |
| Additive | 0,22 Gew.-% |
| Pigment | 18,73 Gew.-% |
| Polyisocyanat 1 | 25,04 Gew.-% |
| Gesamt-Feststoff | 65,79 Gew.-% |
| Wasser | 34,21 Gew.-% |
| Gesamt | 100,00 Gew.-% |

Falls gewünscht, kann der oben beschriebene Ansatz mit Wasser auf Verarbeitungskonsistenz eingestellt werden. Organische Lösemittel sind dazu nicht erforderlich. Der oben angegebene Ansatz ist also frei von organischen Lösern.

Der verarbeitungsfertige Lack wird in einer Naßfilm-Schichtdicke von 200 µm (= 60 bis 70 µm trocken) auf Glasplatten appliziert. Der getrocknete Film ist gänzend und störungsfrei. Nach Ablauf von 10 bis 14 Tagen ist der Härtungsprozeß abgeschlossen.

Die Eigenschaften des Flüssiglackes und des Films können wie folgt skizziert werden:

| | |
|---|---|
| Gelierzeit: | > 8 h |
| Antrocknung (Sand): | > 8 < 14 h |
| Drucktrocknung (klebfrei) | > 8 < 24 h |
| Optik (Glanz) | gut |
| Pendelhärte (Albert/König) | 70-80 sec |
| | |
| Lösemittelbeständigkeit Testbenzin: | sehr gut |
| Solventnaphtha 100: | sehr gut |
| Methoxybutylacetat: | sehr gut |
| Aceton: | sehr gut - gut |
| Ethanol: | sehr gut - gut |
| Wasserfestigkeit: | gut |

Werden die Lacke nach einer Ablüftungszeit von 30 Minuten bei Raumtemperatur 1 Stunde bei 140°C forciert gehärtet, so ergibt sich folgendes Eigenschaftsbild:

| | |
|---|---|
| Optik: | gut |
| Pendelhärte: | 100-110 sec |
| Lösemittelbeständigkeit: | |
| Testbenzin: | sehr gut |
| Solventnaphtha 100: | sehr gut |
| Methoxybutylacetat: | sehr gut |
| Aceton: | gut |
| Ethanol: | gut |
| Wasserfestigkeit: | gut |

## Patentansprüche

1. Gegebenenfalls die üblichen Hilfs- und Zusatzmittel der Lacktechnologie enthaltende, waßrige Beschichtungsmittel, deren Bindemittel im wesentlichen aus einer Kombination aus
a) einer in Wasser bzw. einem Wasser/Lösungsmittel-Gemisch dispergiert vorliegenden Polyolkomponente und
b) einer in der Dispersion der Polyolkomponente a) emulgiert vorliegenden Polyisocyanatkomponente einer Viskositat bei 23°C von 50 bis 10 000 mPa.s
in einem Äquivalentverhältnis von Isocyanatgruppen der Komponente b) zu alkoholischen Hydroxylgruppen der Komponente a) von 0,2:1 bis 5:1 entsprechenden Mengen besteht, dadurch gekennzeichnet, daß
die in a) dispergiert vorliegende Polyolkomponente im wesentlichen aus mindestens einem Polymerisat olefinisch ungesättigter Monomerer mit einem Molekulargewicht Mn von mindestens 500, mindestens zwei alkoholischen Hydroxylgruppen pro Molekül, einer Hydroxylzahl von 15 bis 250 mg KOH/g, einer Säurezahl von 0 bis 7 mg KOH/g und einem Gehalt an Sulfonat- und/oder Carboxylatgruppen von insgesamt 0 bis 4,5 Milliäquivalenten pro 100 g Festharz besteht,
und die Komponente b) aus einer Polyisocyanatkomponente mit einer mittleren NCO-Funktionalität von 1,8 bis 4,2, einem Gehalt an (cyclo)aliphatisch gebundenen Isocyanatgruppen von 12,0 bis 21,5 Gew.-x besteht, die einen Gehalt an innerhalb von Polyetherketten angeordneten Ethylenoxideinheiten von 2 bis 20 Gew.-% aufweist, wobei die Polyetherketten im statistischen Mittel 5 bis 70 Ethylenoxideinheiten aufweisen, und wobei die Herstellung der Polyisocyanatkomponente durch Umsetzung einer Polyisocyanatkomponente A) mit einer (mittleren) NCO-Funktionalität von 2,1 bis 4,4, bestehend aus mindestens einem Polyisocyanat mit ausschließlich (cyclo)aliphatisch gebundenen Isocyanatgruppen mit einem ein- oder mehrwertigen, im statistischen Mittel von 5 bis 70 Ethylenoxideinheiten aufweisenden Polyalkylenoxidpolyetheralkohol B) unter Einhaltung eines NCO/OH-Äquivalentverhältnisses von mindestens 2:1 erfolgte.

2. Beschichtungsmittel gemäß Anspruch 1, dadurch gekennzeichnet, daß die Komponente a) bis zu 10 Gew.-%, bezogen auf das Gewicht der Polymerisatharze, an wasserlöslichen, mehrwertigen Alkoholen des Molekulargewichtsbereichs 62 bis 499 enthält, mit der Maßgabe, daß das Äquivalentverhältnis von Isocyanatgruppen der Komponente b) zu allen alkoholischen Hydroxylgruppen der Komponente a) bei 0,2:1 bis 5:1 liegt.

3. Verfahren zur Herstellung von Beschichtungsmitteln gemäß Anspruch 1, dadurch gekennzeichnet, daß man in einer wäßrigen oder wäßrig-organischen Dispersion mindestens eines Polymerisatharzes der in Anspruch 1 definierten Art eine Polyisocyanatkomponente b) der in Anspruch 1 definierten Art emulgiert, wobei die Mengenverhältnisse der Einzelkomponenten einem Äquivalentverhältnis von Isocyanatgruppen zu alkoholischen Hydroxylgruppen von 0,2:1 bis 5:1 entsprechen, und wobei gegebenenfalls mitverwendete Hilfs- und Zusatzstoffe dem System vor der Zugabe des Polyisocyanats einverleibt werden.

4. Verwendung der Beschichtungsmittel gemäß Anspruch 1 zur Herstellung von Beschichtungen auf beliebigen wasserresistenten Substraten.

## Claims

1. Aqueous coating compositions optionally containing conventional lacquer technology auxiliary substances and additives, the binder of which compositions substantially consists of a combination of
a) a polyol component dispersed in water or a water/solvent mixture and
b) a polyisocyanate component emulsified in the dispersion of polyol component a) and having a viscosity at 23°C of 50 to 10000 mPa·s
in quantities corresponding to an equivalent ratio of isocyanate groups of component b) to alcoholic hydroxyl groups of component a) of 0.2:1 to 5:1,
characterised in that
the polyol component dispersed in a) substantially consists of at least one polymer of olefinically unsaturated monomers having a molecular weight Mₙ of at least 500, at least two alcoholic hydroxyl groups per molecule, a hydroxyl value of 15 to 250 mg of KOH/g, an acid value of 0 to 7 mg of KOH/g and a content of sulphonate and/or carboxylate groups of a total of 0 to 4.5 milliequivalents per 100 g of solid resin and component b) consists of a polyisocyanate component having an average NCO functionality of 1.8 to 4.2, a content of (cyclo)aliphatically attached isocyanate groups of 12.0 to 21.5 wt.%, a content of ethylene oxide units arranged within polyether chains of 2 to 20 wt.%, wherein the polyether chains contain a statistical average of 5 to 70 ethylene oxide units, and wherein the polyisocyanate component was produced by reacting a polyisocyanate component A) having an (average) NCO functionality of 2.1 to 4.4, substantially consisting of at least one polyisocyanate having exclusively (cyclo)aliphatically attached isocyanate groups with a mono- or polyhydric polyalkylene oxide polyether alcohol B) containing a statistical average of 5 to 70 ethylene oxide units, while maintaining an NCO/OH equivalent ratio of at least 2:1.

2. Coating compositions according to claim 1, characterised in that component a) contains up to 10 wt.%, relative to the weight of the polymer resins, of water soluble, polyhydric alcohols of the molecular weight range from 62 to 499, providing that the equivalent ratio of isocyanate groups of component b) to all the alcoholic hydroxyl groups of component a) is 0.2:1 to 5:1.

3. Process for the production of coating compositions according to claim 1, characterised in that a polyisocyanate component b) of the type defined in claim 1 is emulsified into an aqueous or aqueous/organic dispersion of at least one polymer resin of the type defined in claim 1, wherein the quantity ratios of the individual components correspond to an equivalent ratio of isocyanate groups to alcoholic hydroxyl groups of 0.2:1 to 5:1 and wherein any optionally used auxiliary substances and additives are incorporated into the system before addition of the polyisocyanate.

4. Use of the coating compositions according to claim 1 for the production of coatings on any desired water-resistant substrates.

## Revendications

1. Agents de revêtement aqueux contenant éventuellement les adjuvants et additifs courants de la technologie des laques, dont le liant consiste sensiblement en une combinaison de
a) un composant polyol présent sous forme dispersée dans l'eau ou dans un mélange eau/solvant et
b) un composant polyisocyanate présent sous forme émulsifiée dans la dispersion du composant polyol a) d'une viscosité à 23°C de 50 à 10 000 mPa.s
en des quantités correspondant à un rapport d'équivalents des groupes isocyanate du composant b) aux groupes hydroxyle alcooliques du composant a) de 0,2:1 à 5:1, caractérisés en ce que
le composant polyol présent sous forme dispersée dans a) consiste essentiellement en au moins un produit de polymérisation de monomères oléfiniquement insaturés ayant une masse moléculaire Mn d'au moins 500, au moins deux groupes hydroxyle alcooliques par molécule, un indice d'hydroxyle de 15 à 250 mg de KOH/g, un indice d'acide de 0 à 7 mg de KOH/g et une teneur en groupes sulfonate et/ou carboxylate de 0 à 4,5 mEq. pour 100 g de résine solide au total
et le composant b) consiste en un composant polyisocyanate ayant une fonctionnalité NCO moyenne de 1,8 à 4,2, une teneur en groupes isocyanate liés de manière (cyclo)aliphatique de 12,0 à 21,5 % en masse, qui comporte une teneur en unités d'oxyde d'éthylène disposées à l'intérieur de chaînes de polyéther de 2 à 20 % en masse, les chaînes de polyéther comportant en moyenne statistique 5 à 70 unités d'oxyde d'éthylène, et dans lesquels la préparation du composant polyisocyanate a été réalisée par réaction d'un composant polyisocyanate A) ayant une fonctionnalité NCO (moyenne) de 2,1 à 4,4, consistant en au moins un polyisocyanate à groupes isocyanate exclusivement liés de manière (cyclo)aliphatique avec un poly(oxyde d'alkylène)polyétheralcool B) uni- ou plurivalent, comportant en moyenne statistique 5 à 70 unités d'oxyde d'éthylène avec maintien d'un rapport d'équivalents NCO/OH d'au moins 2:1.

2. Agents de revêtement selon la revendication 1, caractérisés en ce que le composant a) contient jusqu'à 10 % en masse, par rapport à la masse des résines de produits de polymérisation, de polyalcools hydrosolubles d'un domaine de masse moléculaire de 62 à 499, à condition que le rapport d'équivalents des groupes isocyanate du composant b) à tous les groupes hydroxyle alcooliques du composant a) soit de 0,2:1 à 5:1.

3. Procédé de préparation d'agents de revêtement selon la revendication 1, caractérisé en ce que l'on émulsifie un composant polyisocyanate b) du type défini dans la revendication 1 dans une dispersion aqueuse ou aqueuse-organique d'au moins une résine de produits de polymérisation du type défini dans la revendication 1, les proportions des différents composants correspondant à un rapport d'équivalents des groupes isocyanate aux groupes hydroxyle alcooliques de 0,2:1 à 5:1, et des adjuvants et additifs éventuellement utilisés conjointement étant incorporés au système avant l'addition du polyisocyanate.

4. Utilisation des agents de revêtement selon la revendication 1 pour la préparation de revêtements sur des substrats résistant à l'eau quelconques.
